# EUROPÄISCHE PATENTANMELDUNG

(11) **EP 3 035 498 A1**
(43) Veröffentlichungstag der Anmeldung: **22.06.2016**
(21) Anmeldenummer: 15200319.0
(22) Anmeldetag: 16.12.2015
(51) Int. Cl.: H02K 1/27, H02K 1/30

(54) **MAGNETRAD**

(30) Priorität: 19.12.2014 DE 102014226735
(71) Anmelder: Continental Automotive GmbH, 30165 Hannover (DE)
(72) Erfinder: Schröder, Lothar, 61184 Karben (DE)

(57) **Zusammenfassung**

Gegenstand der Erfindung ist ein Magnetrad 1 für einen Elektromotor, bestehend aus einer Welle 2 und einer Scheibe 3 aus einem magnetische Partikel enthaltenen Kunststoff, wobei die Scheibe 3 auf einer Trägernabe 4 und die Trägernabe 4 auf der Welle 2 angeordnet ist. Zwischen der Welle 2 und der Scheibe 3 ist mindestens ein elastisches Element 4, 6 angeordnet.

## Beschreibung

Gegenstand der Erfindung ist ein Magnetrad für einen Elektromotor, bestehend aus einer Welle und einer Scheibe aus einem magnetischen Partikel enthaltenen Kunststoff, wobei die Scheibe auf einer Trägernabe und die Trägernabe auf der Welle angeordnet ist.

Derartige Magneträder kommen beispielsweise in bürstenlosen Gleichstrommotoren oder in Aktuatoren als Bestandteil von Positionssensoren zum Einsatz und sind daher bekannt. Die Scheibe des Magnetrades wird durch Spritzgießen eines Eisenpartikel enthaltenden Kunststoffs auf die Trägernabe erzeugt. Die Trägernabe kann ein geschlossener Ring aus einem geeigneten Material wie Stahl oder Messing sein. Anschließend wird die Trägernabe mit der angespritzten Scheibe auf die Welle aufgepresst. Der Nachteil bei dieser Gestaltung besteht darin, dass aufgrund fertigungsbedingter Toleranzen der Welle beim Aufpressen der Trägernabe mitunter erhebliche Spannungen in der Trägernabe auftreten, welche die Lebensdauer des Magnetrades verringern. In besonders schlimmen Fällen drohen Beeinträchtigungen des Magnetrades, die zu Fehlfunktionen im Positionssensor führen können. Aus der DE 10 2011 089 243 A1 ist bekannt, die Trägernabe als geschlitzten Ring auszubilden. Die geschlitzte Ausführung der Trägernabe erlaubt ein Reagieren auf Toleranzen der Welle. Die Trägernabe umgibt dadurch die Welle als eine Art Feder, und kann sich dadurch bei größeren Wellendurchmessern aufweiten. Nachteilig dabei ist, dass mit der Anordnung der Trägernabe auf der Welle der Lage der Trägernabe bestimmt ist. Werden im Rahmen von Testläufen Korrekturen der Winkellage des Magnetrades erforderlich, sind diese aufgrund des Festsitzes der Trägernabe auf der Welle nur mit großem Aufwand möglich. Zudem besteht beim Justieren des Magnetrades die Gefahr der Beschädigung. Eine geringere Presspassung zwischen Welle und Trägernabe ist dagegen nicht möglich, da aufgrund der beim Testlauf auftretenden Motorbeschleunigungen, in Verbindung mit den herstellungsbedingten Toleranzen, kein ausreichender Festsitz gewährleistet ist.

Der Erfindung liegt daher die Aufgabe zugrunde ein Magnetrad zu schaffen, bei dem einerseits Korrekturen der Winkellage mit geringem Aufwand möglich sind und andererseits im Betrieb eine langzeitstabile Verbindung von Magnetrad und Welle gewährleistet ist.

Gelöst wird die Aufgabe dadurch, dass zwischen der Welle und der Scheibe mindestens ein elastisches Element angeordnet.

Das mindestens eine elastische Element ermöglicht eine langzeitstabile Verbindung zwischen Welle und Scheibe in Form eines Festsitzes, erlaubt aber gleichzeitig das Verdrehen des Magnetrades auf der Welle, um so die Winkellage des Magnetrades zu justieren. Bei der Montage des Magnetrades wird das elastische Element verformt und übt eine weiche Pressung zwischen Welle und Trägernabe aus. Dadurch wird der Festsitz erreicht. Gleichzeitig lassen sich dadurch Fertigungstoleranzen ausgleichen, wodurch die Bearbeitungsqualität verringert werden kann, was zu einer kostengünstigeren Fertigung führt. Zum anderen ist so das Justieren der Winkellage des Magnetrades ohne Beschädigungen des Magnetrades möglich.

In einer weiteren Ausgestaltung ist das mindestens eine elastische Element ein O-Ring, welcher zwischen Welle und Trägernabe und damit zwischen Welle und Scheibe angeordnet ist. Aufgrund der Verwendung von Normteilen als elastisches Element gestaltet sich die erfindungsgemäße Vorrichtung besonders kostengünstig.

Eine größere Presspassung für einen stärkeren Festsitz lässt sich ohne Bauteil- oder Toleranzänderungen dadurch erreichen, dass zwischen der Welle und der Trägernabe zwei O-Ringe angeordnet sind. Eine derartige Anordnung ist zudem bei einem Magnetrad mit einer gegenüber dem O-Ring deutlich größere Dicke von Vorteil, beziehungsweise ermöglicht die Verwendung von O-Ringen mit kleinerer Querschnittsfläche.

Eine sichere Lagefixierung des mindestens einen O-Rings wird erreicht, wenn dieser in einer Nut angeordnet ist und die Nuttiefe geringer als die Querschnittshöhe des O-Rings ist. Neben der vereinfachten Montage infolge der Lagefixierung lässt sich über die Wahl der Nuttiefe die gewünschte Presspassung gezielt einstellen. Das Herstellen der Nut erfordert dabei nur einen geringen Mehraufwand. Die Nut kann dabei sowohl an der Trägernabe als auch an in der Welle angeordnet sein.

Die erforderliche Elastizität des Elements lässt sich in einfachster Weise durch die Materialwahl festlegen, indem ein Elastomer als Werkstoff für das elastische Element gewählt wird. Als besonders kostengünstiges Material bei gleichzeitig hoher Verschleißbeständigkeit hat sich Gummi für das elastische Element erwiesen.

Gemäß einer weiteren vorteilhaften Ausgestaltung kann zur Erhöhung der Sicherheit gegen ein Verdrehen des Magnetrades im Betrieb die Trägernabe mit mindestens einem Schweißpunkt mit der Welle verbunden werden.

An mehreren Ausführungsbeispielen wird die Erfindung näher erläutert. Es zeigt in
- Figur 1: ein erfindungsgemäßes Magnetrad mit einer elastische Trägernabe und
- Figuren 2, 3: weitere Ausführungsformen der Trägernabe.

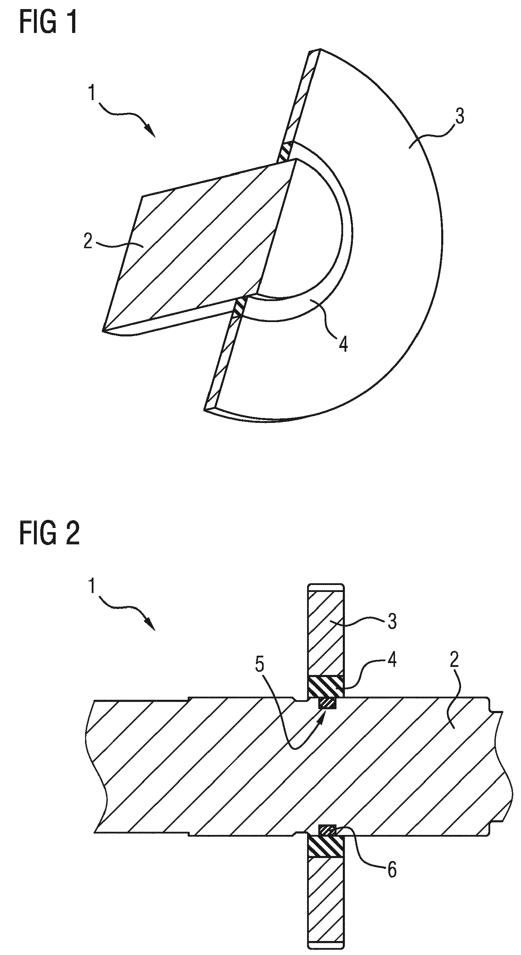

Das Magnetrad 1 in Figur 1 besteht aus einer Welle 2, die die Welle eines Elektromotors eines Aktuators sein kann, und einer Scheibe 3 aus ferritgebundenen Kunststoff, wobei die Scheibe 3 auf einer Trägernabe 4 mittels Spritzgießen angeformt ist. Die Trägernabe 4 besteht aus einem elastischem Kunststoffmaterial, was einerseits eine ausreichenden Festsitz im Betrieb gewährleistet und andererseits ein geringfügiges Verdrehen der Trägernabe 4 mit der Scheibe 3 zur Welle 2 zur Korrektur der Winkellage erlaubt.

Figur 2 zeigt ein Magnetrad 1 mit einer Scheibe 3 und einer metallischen Trägernabe 4 und der Welle 2. Für die elastische Welle-Trägernabe-Verbindung besitzt die Welle eine Nut 5 und der ein O-Ring 6 angeordnet ist. Die Nut 5 besitzt eine Nuttiefe, die geringer als die Querschnittshöhe des O-Rings ist. Damit besitzt der O-Ring einen größeren Außendurchmesser als die Welle in diesem Bereich. Beim Fügen der Trägernabe 4 mit der Scheibe 3 auf die Welle wird der O-Ring verformt, so dass eine weiche Pressung entsteht, die den Festsitz im Betrieb aber auch das Justieren der Winkellage der Scheibe ermöglicht.

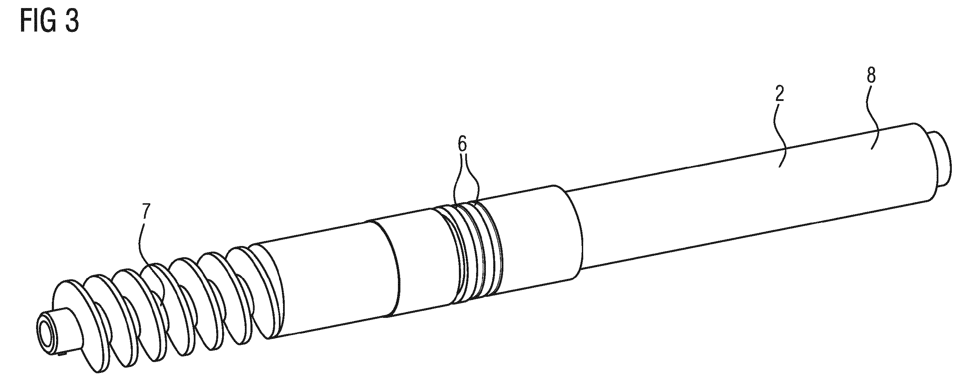

Figur 3 zeigt die Welle 2 eines Aktuators mit einem abtriebsseitigen Schneckenrad 7. Das gegenüberliegende Ende 8 ist Bestandteil des nicht dargestellten Elektromotors. Zwischen den beiden Bereichen sind zwei O-Ringe 6 aus Gummi in je einer Nut 5 der Welle 2 angeordnet.

## Patentansprüche

1. Magnetrad für einen Elektromotor, bestehend aus einer Welle und einer Scheibe aus einem magnetische Partikel enthaltenen Kunststoff, wobei die Scheibe auf einer Trägernabe und die Trägernabe auf der Welle angeordnet ist, **dadurch gekennzeichnet, dass** zwischen der Welle (2) und der Scheibe (3) mindestens ein elastisches Element (4, 6) angeordnet ist.

2. Magnetrad nach Anspruch 1, **dadurch gekennzeichnet, dass** das mindestens eine elastische Element (6) ein O-Ring ist.

3. Magnetrad nach Anspruch 2, **dadurch gekennzeichnet, dass** zwischen der Welle (2) und der Trägernabe (4) zwei O-Ringe (6) angeordnet sind.

4. Magnetrad nach einem der vorhergehenden Ansprüche, **dadurch gekennzeichnet, dass** der mindestens eine O-Ring (6) in einer Nut (5) angeordnet ist und die Nuttiefe geringer als Querschnittshöhe des O-Rings (6) ist.

5. Magnetrad nach Anspruch 4, **dadurch gekennzeichnet, dass** die Nut (5) an der Welle (2) angeordnet ist.

6. Magnetrad nach Anspruch 4, **dadurch gekennzeichnet, dass** die Nut (5) an der Trägernabe (4) angeordnet ist.

7. Magnetrad nach zumindest einem der vorhergehenden Ansprüche, **dadurch gekennzeichnet, dass** das elastische Element (4, 6) ein Elastomer ist.

8. Magnetrad nach zumindest einem der vorhergehenden Ansprüche, **dadurch gekennzeichnet, dass** das Elastomer Gummi ist.

9. Magnetrad nach zumindest einem der vorhergehenden Ansprüche, **dadurch gekennzeichnet, dass** die Trägernabe (4) mit mindestens einem Schweißpunkt mit der Welle (2) verbunden ist.
